# FASCICULE DE BREVET EUROPEEN

(11) **EP 2 997 233 B1**
(45) Date de publication et mention de la délivrance du brevet: **14.11.2018**
(21) Numéro de dépôt: 14731685.5
(22) Date de dépôt: 12.05.2014
(51) Int. Cl.: F01D 11/00, F02C 7/28

(54) **ENSEMBLE FORMANT JOINT D'ÉTANCHÉITE POUR UNE TURBOMACHINE COMPORTANT DES MOYENS DE LUBRIFICATION D'UN JOINT À BROSSE**
DICHTUNGSANORDNUNG FÜR EINEN TURBINENMOTOR MIT EINEM MITTEL ZUM SCHMIEREN EINER BÜRSTENDICHTUNG
SEAL ASSEMBLY FOR A TURBINE ENGINE COMPRISING MEANS FOR LUBRICATING A BRUSH SEAL

(30) Priorité: 13.05.2013 FR 1354266
(43) Date de publication de la demande: 23.03.2016
(73) Titulaire: Safran Aircraft Engines, 75015 Paris (FR)
(72) Inventeur: LAGARDE, Romain, F-77550 Moissy-Cramayel Cedex (FR); COMIN, François, Jean, F-77550 Moissy-Cramayel Cedex (FR); MORREALE, Serge, René, F-77550 Moissy-Cramayel Cedex (FR)
(74) Mandataire: Brevalex
(86) Numéro de dépôt international: PCT/FR2014/051087
(87) Numéro de publication internationale: WO 2014/184477

(56) Documents cités:
- EP-A2- 1 203 905
- WO-A1-2011/117542
- US-B1- 6 609 888

## Description

### DOMAINE TECHNIQUE

La présente invention se rapporte au domaine des turbomachines, et plus particulièrement au domaine général des systèmes d'étanchéité destinés à assurer l'étanchéité entre deux enceintes d'une turbomachine, comportant en particulier les joints à brosse.

L'invention s'applique à tout type de turbomachines terrestres ou aéronautiques, et notamment aux turbomachines d'aéronef telles que les turboréacteurs et les turbopropulseurs. Plus préférentiellement, l'invention s'applique à un turboréacteur double corps et double flux.

L'invention concerne ainsi plus spécifiquement un ensemble formant joint d'étanchéité pour une turbomachine comportant un joint à brosse et la turbomachine associée, ainsi qu'un procédé de fabrication d'un tel ensemble.

### ÉTAT DE LA TECHNIQUE ANTÉRIEURE

Dans le domaine des turbomachines, il existe différents types de systèmes d'étanchéité pour assurer l'étanchéité entre deux parties de la turbomachine.

On peut notamment distinguer les systèmes d'étanchéité « à contact permanent » et les systèmes d'étanchéité « sans contact ». Les systèmes d'étanchéité « à contact permanent » regroupent par exemple les joints à brosse et les joints radiaux segmentés, et se caractérisent par le fait d'avoir, en fonctionnement normal, un contact permanent entre deux pièces de la turbomachine. Les systèmes d'étanchéité « sans contact » comportent par exemple les joints à labyrinthe, et se caractérisent par une absence de contact entre les pièces de la turbomachine, sauf le cas échéant lors d'événements particuliers comme des niveaux de balourd importants ou des manoeuvres sévères de la turbomachine.

Les joints à brosse sont par exemple connus des brevets US 4,781,388, US 5,480,162 et US 6,170,831. Ils sont constitués d'une pluralité de poils ou fils, par exemple en carbone, voire en métal ou kevlar®, qui sont sertis ou soudés et maintenus dans un logement à l'une de leurs extrémités et qui sont en contact, à leurs extrémités libres, avec la surface de la partie à étancher de la turbomachine. De tels joints à brosse peuvent permettre de s'adapter aux variations de jeu que subissent les dispositifs d'étanchéité. En effet, les poils d'un joint à brosse peuvent s'adapter par construction aux surfaces déformées ou discontinues de la partie à étancher.

Le contact des poils du joint à brosse avec la surface de la partie à étancher de la turbomachine, par exemple un arbre en rotation, permet d'assurer la fonction d'étanchéité du joint à brosse. Toutefois, ce contact engendre un frottement des poils sur cette surface qui implique généralement une usure prématurée des poils. Les poils ainsi usés ne peuvent alors plus permettre d'assurer l'étanchéité du joint à brosse, de sorte que son efficacité devient très réduite, voire nulle.

Un dispositif de lubrification d'un joint à brosse est connu du document WO 2011/117542.

### EXPOSÉ DE L'INVENTION

Il existe par conséquent un besoin pour améliorer l'efficacité des joints à brosse permettant d'assurer l'étanchéité entre deux parties d'une turbomachine.

Il existe en particulier un besoin pour permettre de diminuer, voire d'empêcher, l'usure des poils de tels joints à brosse.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un ensemble formant joint d'étanchéité pour une turbomachine, tel que défini dans la revendication 1.

Grâce à l'invention, il est possible de réaliser une lubrification (ou « mouillage ») des poils des joints à brosse permettant ainsi de limiter, voire d'éviter, l'usure des poils et de garantir le plus longtemps possible la fonction d'étanchéité des joints à brosse. L'invention peut donc permettre de prolonger la durée de vie des joints à brosse utilisés dans les turbomachines.

L'ensemble formant joint d'étanchéité selon l'invention peut en outre comporter l'une ou plusieurs des caractéristiques suivantes prises isolément ou suivant toutes combinaisons techniques possibles.

Le joint à brosse peut permettre d'assurer l'étanchéité d'une partie quelconque à étancher de la turbomachine, en particulier celle d'un arbre tournant.

L'ensemble formant joint d'étanchéité selon l'invention peut être situé entre deux enceintes de la turbomachine entre lesquelles une étanchéité est requise, et l'huile de lubrification peut avantageusement provenir de l'huile située dans l'une au moins des deux enceintes de la turbomachine entre lesquelles est situé l'ensemble formant joint d'étanchéité.

La rainure de répartition de l'huile de lubrification s'étend sur tout le pourtour du couvercle d'appui. En particulier, la rainure peut s'étendre sur 360° autour de l'axe de rotation d'un arbre tournant avec lequel les poils du joint à brosse sont en contact.

Le couvercle d'appui comporte une pluralité de canaux d'écoulement de l'huile de lubrification vers les poils du joint à brosse, pouvant présenter des sections variables et/ou une répartition angulaire variable sur le pourtour du couvercle d'appui, déterminées notamment de façon à ce que tous les canaux assurent une lubrification des poils du joint à brosse avec le même débit d'huile de lubrification.

De cette façon, il peut être possible d'avoir une lubrification homogène du joint à brosse. Les caractéristiques des canaux, notamment leur dimensionnement et leur répartition, peuvent ainsi être déterminées de sorte que ceux-ci constituent des points d'alimentation en huile de lubrification des poils du joint à brosse avec un débit d'huile uniforme.

Par ailleurs, lors du fonctionnement de la turbomachine, de l'huile pouvant en permanence être contenue dans l'une au moins des deux enceintes entre lesquelles est situé l'ensemble formant joint d'étanchéité selon l'invention, une lubrification du joint à brosse peut être assurée de façon continue.

Les canaux d'écoulement sont avantageusement dimensionnés de manière à ce que le débit total d'huile de lubrification sortant par les canaux soit égal au débit total d'huile de lubrification entrant par l'ouverture de collecte d'huile dans le couvercle d'appui, de manière à ce que le couvercle ne se vide pas plus vite qu'il ne se remplisse (auquel cas l'huile ne pourrait pas sortir des canaux les plus hauts), ou inversement (auquel cas l'huile déborderait par l'ouverture de collecte).

L'ouverture de collecte d'huile de lubrification du couvercle d'appui s'étend sur au moins un quart du pourtour du couvercle d'appui.

La rainure de répartition de l'huile de lubrification peut être formée radialement sur le pourtour du couvercle d'appui, notamment par usinage, et refermée par l'intermédiaire du capot de retenue pour permettre l'écoulement de l'huile de lubrification à l'intérieur de celle-ci.

En variante, le couvercle d'appui peut être formé par l'assemblage d'une première partie et d'une deuxième partie. La rainure de répartition de l'huile de lubrification peut alors être formée, notamment par usinage, sur l'une des première partie et deuxième partie et refermée par l'autre des première partie et deuxième partie pour permettre l'écoulement de l'huile de lubrification à l'intérieur de celle-ci.

En variante encore, l'ensemble formant joint d'étanchéité selon l'invention peut comporter un segment de fermeture annulaire situé entre le joint à brosse et le couvercle d'appui. La rainure de répartition de l'huile de lubrification peut alors être formée, notamment par usinage, sur le couvercle d'appui et refermée par l'intermédiaire du segment de fermeture pour permettre l'écoulement de l'huile de lubrification à l'intérieur de celle-ci.

L'invention a encore pour objet, selon un autre de ses aspects, une turbomachine, caractérisée en ce qu'elle comporte un ensemble formant joint d'étanchéité tel que défini précédemment.

Par ailleurs, l'invention a encore pour objet, selon un autre de ses aspects, un procédé de fabrication d'un ensemble formant joint d'étanchéité tel que défini précédemment.

Dans le procédé selon l'invention, une pluralité de canaux d'écoulement de l'huile de lubrification vers les poils du joint à brosse peuvent être formés, notamment par perçage, sur le couvercle d'appui. Les sections et/ou la répartition des canaux sur le pourtour du couvercle d'appui peuvent être déterminées de façon à ce que tous les canaux assurent une lubrification des poils du joint à brosse avec le même débit d'huile de lubrification pour permettre une lubrification homogène du joint à brosse.

La turbomachine et le procédé de fabrication selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1A illustre, en coupe axiale, un ensemble formant joint d'étanchéité selon l'invention,
- la figure 1B illustre, en coupe radiale, le couvercle d'appui de l'ensemble formant joint d'étanchéité de la figure 1A,
- les figures 2A à 2D représentent différentes vues, en perspective et en coupe, d'un premier exemple de réalisation d'un ensemble formant joint d'étanchéité selon l'invention,
- les figures 3A à 3E représentent différentes vues, en perspective et en coupe, d'un deuxième exemple de réalisation d'un ensemble formant joint d'étanchéité selon l'invention, et
- les figures 4A à 4D représentent différentes vues, en perspective et en coupe, d'un troisième exemple de réalisation d'un ensemble formant joint d'étanchéité selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

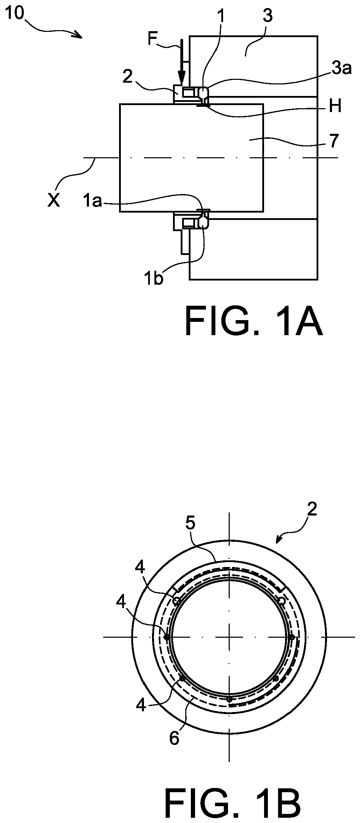

En référence à la figure 1A, on a représenté, en coupe axiale, un ensemble formant joint d'étanchéité 10 pour une turbomachine conforme à l'invention.

L'ensemble formant joint d'étanchéité 10 comporte un joint à brosse 1 formé par une pluralité de poils la, par exemple en carbone, disposés autour d'une âme 1b. Le joint à brosse 1 permet ainsi d'assurer une étanchéité entre deux enceintes de la turbomachine, dont l'une au moins comporte de l'huile destinée à servir d'huile de lubrification pour l'ensemble formant joint d'étanchéité 10.

Les poils la du joint à brosse 1 viennent au contact d'un arbre tournant 7 selon un axe de rotation X, ce qui induit un frottement permanent des poils la sur l'arbre tournant 7 et entraîne une usure prématurée des poils la du joint à brosse 1 réduisant les capacités d'étanchéité du joint à brosse 1.

L'ensemble formant joint d'étanchéité 10 comporte en outre un capot de retenue 3 pourvu d'une portion 3a permettant de loger au moins partiellement le joint à brosse 1, comme représenté sur la figure 1. La portion 3a peut correspondre à un relief, notamment en creux, du capot de retenue 3.

De plus, l'ensemble formant joint d'étanchéité 10 comporte un couvercle d'appui 2 qui est placé au contact du joint à brosse 1 pour le maintenir en position contre le capot de retenue 3, le joint à brosse 1 étant situé entre le capot de retenue 3 et le couvercle d'appui 2. Plus spécifiquement, le couvercle d'appui 2 permet de comprimer et de maintenir en position le joint à brosse 1 contre le capot de retenue 3.

Afin de diminuer, voir d'empêcher, l'usure des poils la du joint à brosse 1 due au frottement sur l'arbre tournant 7, le couvercle d'appui 2 comporte, conformément à l'invention, des moyens de lubrification des poils la du joint à brosse 1.

Ces moyens de lubrification permettent de lubrifier les poils la du joint à brosse 1 en récupérant l'huile projetée à l'intérieur d'au moins une des enceintes et pénétrant dans l'ensemble formant joint d'étanchéité 10 selon la flèche F, comme représenté sur la figure 1, de manière à former un film d'huile H au niveau des poils la du joint à brosse 1.

En particulier, les moyens de lubrification comportent une ouverture 5 de collecte de l'huile de lubrification, une rainure 6 de répartition de l'huile de lubrification connectée à l'ouverture 5, c'est-à-dire en communication fluidique avec l'ouverture 5, et une pluralité de canaux 4 d'écoulement de l'huile de lubrification vers les poils la du joint à brosse 1, tous connectés à la rainure 6, c'est-à-dire tous en communication fluidique avec la rainure 6.

La figure 1B représente, en coupe radiale, le couvercle d'appui 2 de l'ensemble formant joint d'étanchéité 10 de la figure 1.

Comme on peut le voir, l'ouverture 5 de collecte est réalisée sur la partie supérieure du couvercle d'appui 2, par exemple sur un quart du pourtour du couvercle d'appui 2. De plus, la rainure 6 de répartition de l'huile de lubrification est par exemple réalisée sur tout le pourtour du couvercle d'appui 2, c'est-à-dire sur un angle de 360° autour de l'axe de rotation X de l'arbre tournant 7. Une série de plusieurs canaux 4 d'écoulement de l'huile de lubrification vers les poils la du joint à brosse 1 est également réalisée sur le pourtour du couvercle d'appui 2.

Les canaux 4 peuvent par exemple être réalisés par perçage du couvercle d'appui 2. Leur dimensionnement, notamment leur diamètre (ou section), ainsi que leur répartition sur le pourtour du couvercle d'appui 2, peuvent être déterminés de sorte à ce que le débit d'huile de lubrification sortant de chaque canal 4 vers les poils la du joint à brosse 1 soit identique, c'est-à-dire de sorte que la rainure 6 de répartition permette d'alimenter chaque canal 4 de façon à ce que les canaux 4 assurent une lubrification homogène sur l'ensemble du joint à brosse 1. Ainsi, la répartition angulaire des canaux 4 peut être régulière, ou le plus souvent variable, sur le pourtour du couvercle d'appui 2. De même, les sections ou diamètres des canaux 4 peuvent être identiques, ou le plus souvent différents.

Grâce à l'ensemble formant joint d'étanchéité 10 selon l'invention, l'huile qui ruisselle dans une enceinte de la turbomachine à proximité de l'ensemble formant joint d'étanchéité 10 peut être captée selon la flèche F par l'ouverture 5 de collecte située sur le couvercle d'appui 2. Puis, l'huile de lubrification remplie la rainure 6 de répartition, qui elle-même permet la répartition de l'huile dans les différents canaux 4 de manière à former un film d'huile H sur les poils la du joint à brosse 1 qui est alors lubrifié de façon homogène.

En outre, l'huile ruisselant en permanence dans l'enceinte lorsque la turbomachine est en fonctionnement, la lubrification du joint à brosse 1 peut être assurée de façon continue.

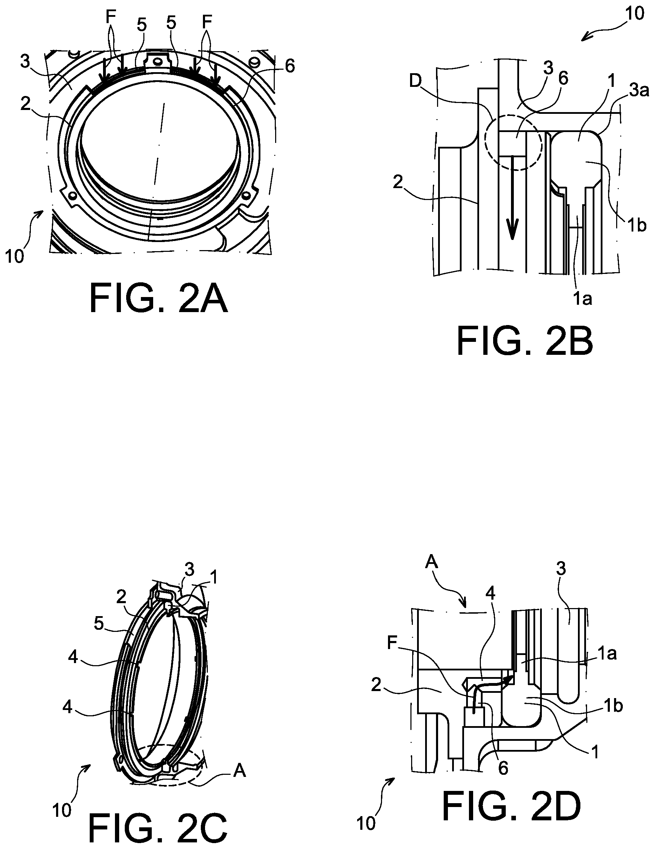

Les figures 2A à 2D représentent, en perspective pour les figures 2A et 2C et en coupe axiale pour les figures 2B et 2D, un premier exemple de réalisation d'un ensemble formant joint d'étanchéité 10 conforme à l'invention. La figure 2D représente un agrandissement de la zone A de la figure 2C.

Dans cet exemple, la rainure 6 de répartition de l'huile de lubrification est formée radialement sur le pourtour du couvercle d'appui 2, comme on peut le voir par exemple sur les figures 2A et 2C, par exemple par usinage, et refermée par l'intermédiaire du capot de retenue 3 pour permettre l'écoulement de l'huile de lubrification à l'intérieur de la rainure 6.

La zone D représentée sur la figure 2B permet en particulier de visualiser la particularité de réalisation de ce premier exemple d'ensemble formant joint d'étanchéité 10 selon l'invention. Comme on peut le voir, la rainure 6, s'étendant sur 360° autour de l'axe X de l'arbre tournant 7, est refermée par l'assemblage du capot de retenue 3 sur le couvercle d'appui 2. La fermeture ainsi obtenue par le capot de retenue 3 au contact du couvercle d'appui 2 permet le remplissage en huile de la rainure 6.

Sur la figure 2C, on peut apercevoir la réalisation des canaux 4 d'écoulement de l'huile de lubrification vers les poils la du joint à brosse 1 sur le pourtour du couvercle d'appui 2, notamment par des perçages de diamètres différents, les canaux 4 étant répartis de manière à mouiller le joint à brosse 1 avec un débit d'huile le plus homogène possible.

Sur la figure 2D, on peut visualiser l'écoulement de l'huile de lubrification depuis la rainure 6 vers les canaux 4 et les poils la du joint à brosse 1.

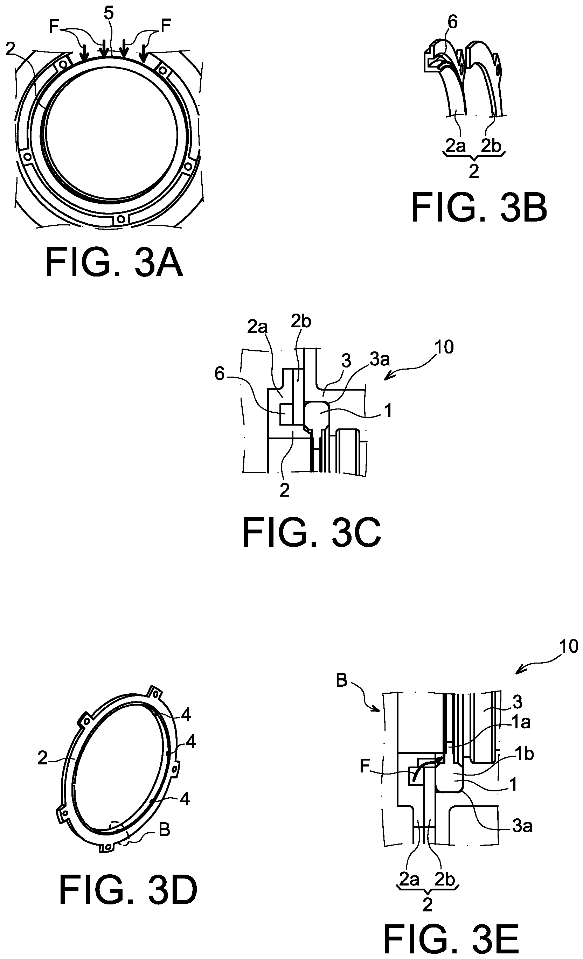

Les figures 3A à 3E représentent, en vue de face pour la figure 3A, en perspective pour les figures 3B et 3D et en coupe axiale pour les figures 3C et 3E, un deuxième exemple de réalisation d'un ensemble formant joint d'étanchéité 10 selon l'invention. La figure 3E représente un agrandissement de la zone B de la figure 3D.

Dans cet exemple, le couvercle d'appui 2 est formé par l'assemblage d'une première partie 2a et d'une deuxième partie 2b, comme on peut le voir notamment sur la figure 3B.

La rainure 6 de répartition de l'huile de lubrification est formée, par exemple par usinage, sur la première partie 2a et refermée par la deuxième partie 2b pour permettre l'écoulement de l'huile de lubrification à l'intérieur de la rainure 6.

Les deux parties 2a et 2b sont assemblées ensemble axialement, c'est-à-dire que la deuxième partie 2b referme la première partie 2a du couvercle d'appui 2 selon l'axe de rotation X de l'arbre tournant 7.

Dans les premier et deuxième exemples précédents, décrits respectivement en référence aux figures 2A à 2D et 3A à 3E, l'utilisation respectivement d'un alésage du capot de retenue 3 pour fermer la rainure 6 de répartition ou la décomposition du couvercle d'appui 2 en une première partie 2a et une deuxième partie 2b peuvent permettre d'intégrer des moyens de lubrification des poils la du joint à brosse 1 dans un encombrement réduit de l'ensemble formant joint d'étanchéité 10.

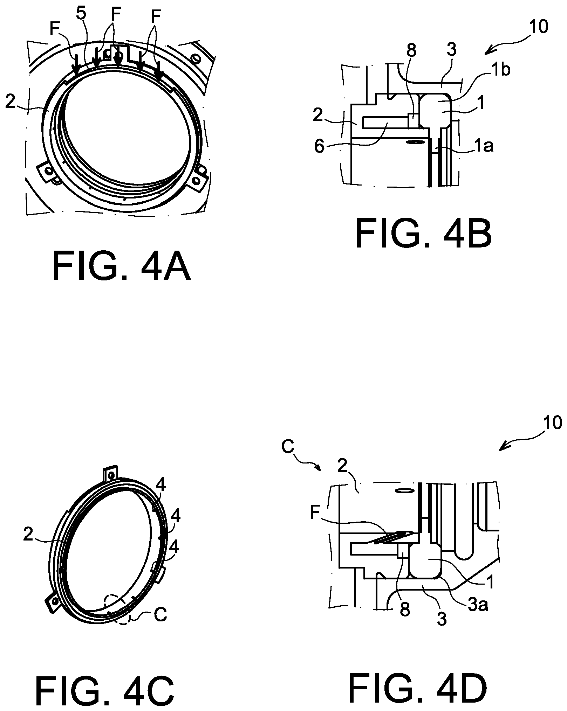

En référence aux figures 4A à 4D, on a représenté, en perspective pour les figures 4A et 4C et en coupe axiale pour les figures 4B et 4D, un troisième exemple de réalisation d'un ensemble formant joint d'étanchéité 10 selon l'invention. La figure 4D représente un agrandissement de la zone C de la figure 4D.

Dans cet exemple, l'ensemble formant joint d'étanchéité 10 comporte un segment de fermeture 8 annulaire, visible sur les figures 4B et 4D, situé entre le joint à brosse 1 et le couvercle d'appui 2. La rainure 6 de répartition de l'huile de lubrification est formée, par exemple par usinage, sur le couvercle d'appui 2 et refermée alors par l'intermédiaire du segment de fermeture 8 pour permettre l'écoulement de l'huile de lubrification à l'intérieur de celle-ci.

Le segment de fermeture 8, plaqué entre le couvercle d'appui 2 et le joint à brosse 1, peut ainsi permettre d'assurer la répartition sur 360° autour de l'axe X de l'arbre tournant 7 de l'huile de lubrification destinée à alimenter les canaux 4.

Bien entendu, l'invention n'est pas limitée aux exemples de réalisation qui viennent d'être décrits. Diverses modifications peuvent y être apportées par l'homme du métier, dans le cadre de la portée des revendications.

L'expression « comportant un » doit être comprise comme étant synonyme de « comportant au moins un », sauf si le contraire est spécifié.

## Revendications

1. Ensemble formant joint d'étanchéité (10) pour une turbomachine, comportant :
- un joint à brosse (1) formé d'une pluralité de poils (1a) d'étanchéité entourant une âme (1b),
- un capot de retenue (3) comportant une portion (3a) logeant au moins partiellement le joint à brosse (1), et
- un couvercle d'appui (2), placé au contact du joint à brosse (1) pour le maintenir en position contre le capot de retenue (3), le joint à brosse (1) étant situé entre le capot de retenue (3) et le couvercle d'appui (2),
**caractérisé en ce que** le couvercle d'appui (2) comporte des moyens de lubrification (4, 5, 6) des poils (1a) du joint à brosse (1), comprenant :
- une ouverture (5) de collecte d'huile de lubrification, s'étendant sur au moins un quart du pourtour du couvercle d'appui (2),
- une rainure (6) de répartition de l'huile de lubrification connectée à ladite ouverture (5), s'étendant sur tout le pourtour du couvercle d'appui (2), et
- une pluralité de canaux (4) d'écoulement de l'huile de lubrification vers les poils (1a) du joint à brosse (1), connectés à ladite rainure (6).

2. Ensemble selon la revendication 1, **caractérisé en ce que** les canaux (4) d'écoulement de l'huile de lubrification vers les poils (1a) du joint à brosse (1) présentent des sections variables et/ou une répartition angulaire variable sur le pourtour du couvercle d'appui (2), déterminées notamment de façon à ce que tous les canaux (4) assurent une lubrification des poils (1a) du joint à brosse (1) avec le même débit d'huile de lubrification.

3. Ensemble selon l'une quelconque des revendications précédentes, **caractérisé en ce que** la rainure (6) de répartition de l'huile de lubrification est formée radialement sur le pourtour du couvercle d'appui (2), notamment par usinage, et refermée par l'intermédiaire du capot de retenue (3) pour permettre l'écoulement de l'huile de lubrification à l'intérieur de celle-ci.

4. Ensemble selon l'une quelconque des revendications 1 à 3, **caractérisé en ce que** le couvercle d'appui (2) est formé par l'assemblage d'une première partie (2a) et d'une deuxième partie (2b), la rainure (6) de répartition de l'huile de lubrification étant formée, notamment par usinage, sur l'une des première partie (2a) et deuxième partie (2b) et refermée par l'autre des première partie (2a) et deuxième partie (2b) pour permettre l'écoulement de l'huile de lubrification à l'intérieur de celle-ci.

5. Ensemble selon l'une quelconque des revendications 1 à 3, **caractérisé en ce qu'**il comporte un segment de fermeture (8) annulaire situé entre le joint à brosse (1) et le couvercle d'appui (2), la rainure (6) de répartition de l'huile de lubrification étant formée, notamment par usinage, sur le couvercle d'appui (2) et refermée par l'intermédiaire du segment de fermeture (8) pour permettre l'écoulement de l'huile de lubrification à l'intérieur de celle-ci.

6. Turbomachine, **caractérisée en ce qu'**elle comporte un ensemble formant joint d'étanchéité (10) selon l'une quelconque des revendications précédentes.

7. Procédé de fabrication d'un ensemble formant joint d'étanchéité (10) selon l'une quelconque des revendications 1 à 5, **caractérisé en ce qu'**une pluralité de canaux (4) d'écoulement de l'huile de lubrification vers les poils (1a) du joint à brosse (1) sont formés, notamment par perçage, sur le couvercle d'appui (2), les sections et/ou la répartition des canaux (4) sur le pourtour du couvercle d'appui (2) étant déterminées de façon à ce que tous les canaux (4) assurent une lubrification des poils (1a) du joint à brosse (1) avec le même débit d'huile de lubrification pour permettre une lubrification homogène du joint à brosse (1).

## Patentansprüche

1. Dichtungsanordnung (10) für ein Turbotriebwerk, welche aufweist:
- eine Bürstendichtung (1), die von einer Vielzahl von Dicht-Borsten (1a) gebildet ist, die einen Kern (1b) umgeben,
- eine Rückhaltekappe (3), die einen Abschnitt (3a) aufweist, der die Bürstendichtung (1) zumindest teilweise aufnimmt, und
- einen Stützdeckel (2), der in Kontakt mit der Bürstendichtung (1) angeordnet ist, um diese an ihrem Platz an der Rückhaltekappe (3) zu halten, wobei sich die Bürstendichtung (1) zwischen der Rückhaltekappe (3) und dem Stützdeckel (2) befindet,
**dadurch gekennzeichnet,**
**dass** der Stützdeckel (2) Schmiermittel (4, 5, 6) für die Borsten (1a) der Bürstendichtung (1) aufweist, die beinhalten:
- eine Sammelöffnung (5) für Schmieröl, die sich über mindestens ein Viertel des äußeren Umfangs des Stützdeckels (2) erstreckt,
- eine Verteilerrinne (6) für das Schmieröl, die mit der genannten Öffnung (5) verbunden ist und sich über den gesamten äußeren Umfang des Stützdeckels (2) erstreckt, und
- eine Mehrzahl von Zuführungskanälen (4) für das Schmieröl zu den Borsten (1a) der Bürstendichtung (1), die mit der genannten Rinne (6) verbunden sind.

2. Anordnung nach Anspruch 1,
**dadurch gekennzeichnet,**
**dass** die Zuführungskanäle (4) für das Schmieröl zu den Borsten (1a) der Bürstendichtung (1) variable Querschnitte und/oder eine variable Winkelverteilung auf dem äußeren Umfang des Stützdeckels (2) aufweisen, die insbesondere dergestalt konzipiert sind, dass alle Kanäle (4) eine Schmierung der Borsten (1a) der Bürstendichtung (1) mit der gleichen Menge Schmieröl gewährleisten.

3. Anordnung nach einem der vorherigen Ansprüche,
**dadurch gekennzeichnet,**
**dass** die Verteilerrinne (6) für das Schmieröl radial auf dem äußeren Umfang des Stützdeckels (2) gebildet ist, insbesondere durch Bearbeitung, und vermittels der Rückhaltekappe (3) geschlossen wird, um die Zuführung des Schmieröls in ihrem Inneren zu ermöglichen.

4. Anordnung nach einem der Ansprüche 1 bis 3,
**dadurch gekennzeichnet,**
**dass** der Stützdeckel (2) durch Zusammenfügen eines ersten Teils (2a) und eines zweiten Teils (2b) gebildet wird, wobei die Verteilerrinne (6) für das Schmieröl insbesondere durch Bearbeitung an einem von beiden, dem ersten Teil (2a) oder zweiten Teil (2b), gebildet wird und durch den anderen, den ersten Teil (2a) oder zweiten Teil (2b), geschlossen wird, um die Zuführung des Schmieröls in ihrem Inneren zu ermöglichen.

5. Anordnung nach einem der Ansprüche 1 bis 3,
**dadurch gekennzeichnet,**
**dass** sie ein ringförmiges Schließsegment (8) enthält, das sich zwischen der Bürstendichtung (1) und dem Stützdeckel (2) befindet, wobei die Verteilerrinne (6) für das Schmieröl insbesondere durch Bearbeitung an dem Stützdeckel (2) gebildet wird und vermittels des Schließsegments (8) geschlossen wird, um die Zuführung des Schmieröls in ihrem Inneren zu ermöglichen.

6. Turbotriebwerk,
**dadurch gekennzeichnet,**
**dass** es eine Dichtungsanordnung (10) nach einem der vorherigen Ansprüche aufweist.

7. Verfahren zur Herstellung einer Dichtungsanordnung (10) nach einem der Ansprüche 1 bis 5,
**dadurch gekennzeichnet,**
**dass** eine Mehrzahl von Zuführungskanälen (4) für das Schmieröl zu den Borsten (1a) der Bürstendichtung (1) insbesondere durch Bohren an dem Stützdeckel (2) gebildet wird, wobei die Querschnitte und/oder die Verteilung der Kanäle (4) auf dem äußeren Umfang des Stützdeckels (2) dergestalt konzipiert sind, dass alle Kanäle (4) eine Schmierung der Borsten (1a) der Bürstendichtung (1) mit der gleichen Menge Schmieröl gewährleisten, um eine homogene Schmierung der Bürstendichtung (1) zu ermöglichen.

## Claims

1. Assembly forming a seal (10) for a turbine engine, comprising:
- a brush seal (1) formed by a plurality of sealing bristles (1a) surrounding a core (1b),
- a retaining cap (3) comprising a portion (3a) at least partially housing a brush seal (1), and
- a support cover (2), placed in contact with the brush seal (1) in order to hold it in position against the retaining cap (3), the brush seal (1) being situated between the retaining cap (3) and the support cover (2),
**characterised in that** the support cover (2) comprises means (4, 5, 6) for lubricating the bristles (1a) of the brush seal (1), comprising:
- an opening (5) for collecting lubricating oil, extending over at least a quarter of the periphery of the support cover (2),
- a groove (6) for distributing lubricating oil connected to said opening (5), extending over the entire periphery of the support cover (2), and
- a plurality of channels (4) for flow of the lubricating oil towards the bristles (1a) of the brush seal (1), connected to said groove (6).

2. Assembly according to claim 1, **characterised in that** the channels (4) for flow of lubricating oil towards the bristles (1a) of the brush seal (1) have variable cross sections and/or a variable angular distribution on the periphery of the support cover (2), and determined in particular so that all the channels (4) provide lubrication of the bristles (1a) of the brush seal (1) with the same lubricating oil flow rate.

3. Assembly according to any one of the preceding claims, **characterised in that** the lubricating oil distribution groove (6) is formed radially on the periphery of the support cover (2), in particular by machining, and enclosed by means of the retaining cap (5) to allow flow of lubricating oil therein.

4. Assembly according to any one of claims 1 to 3, **characterised in that** the support cover (2) is formed by assembling a first part (2a) and a second part (2b), the lubricating oil distribution groove (6) being formed, in particular by machining, on one of the first part (2a) and second part (2b) and enclosed by the other one of the first part (2a) and second part (2b) to enable lubricating oil to flow therein.

5. Assembly according to any one of claims 1 to 3, **characterised in that** it comprises an annular closure segment (8) situated between the brush seal (1) and the support cover (2), the lubricating oil distribution groove (6) being formed, in particular by machining, on the support cover (2) and enclosed by means of the closure segment (8) to enable lubricating oil to flow therein.

6. Turbine engine, **characterised in that** it comprises an assembly forming a seal (10) according to any one of the preceding claims.

7. Method for manufacturing an assembly forming a seal (10) according to any one of claims 1 to 5, **characterised in that** a plurality of channels (4) for flow of lubricating oil towards the bristles (1a) of the brush seal (1) are formed, in particular by piercing, on the support cover (2), the cross sections and/or distribution of the channels (4) on the periphery of the support (2) being determined so that all the channels (4) provide lubrication of the bristles (1a) of the brush seal (1) with the same flow rate of lubricating oil to allow homogeneous lubrication of the brush seal (1).
